# EUROPÄISCHE PATENTANMELDUNG

(11) **EP 1 281 554 A1**
(43) Veröffentlichungstag der Anmeldung: **05.02.2003**
(21) Anmeldenummer: 02016007.3
(22) Anmeldetag: 18.07.2002
(51) Int. Cl.: B60J 7/20, B60J 7/14, B60J 10/00, B60J 1/18, B60R 13/07

(54) **Dichtungsanordnung für ein Klappdach eines Hardtop-Fahrzeug**

(30) Priorität: 30.07.2001 DE 10137032
(71) Anmelder: DaimlerChrysler AG, 70567 Stuttgart (DE)
(72) Erfinder: Graf, Thomas, 71069 Sindelfingen (DE); Wacker, Uwe, 71101 Schönaich (DE)

(57) **Zusammenfassung**

Es wird eine Dichtungsanordnung beschrieben, die für eine Klappdachanordnung geeignet ist, bei der über schwenkbare C-Säulen (2) ein Frontdachteil (1) in eine Ablagestelle abklappbar ist und die Scheibe (3) eines Heckdachteiles gegenüber den C-Säulen (2) und dem Frontdachteil (1) verschwenkbar ist. Diese Heckscheibe (3) wird in ihrem vorderen Bereich mit einem außen umlaufenden, aus zwei Abdichtungen (6,7) bestehenden Streifen (5) versehen, wobei die innenliegende Abdichtung (6) eine Hauptabdichtung bildet und mit der Hauptabdichtung (9) einer weiteren Dichtung (5') zur Anlage kommt, die ebenfalls aus zwei parallelen Dichtungen (9,10) mit einem dazwischen liegenden Leckwasserkanal (11) aufgebaut ist. Es wird außerdem eine Verbindung zwischen dem Leckwasserkanal (8) des ersten Dichtstreifens (5) und dem Leckwasserkanal (11) der zweiten Dichtung (5') vorgesehen, die an den C-Säulen (2) angeordnet ist, so dass bei geschlossenem Hardtop Wasser von der Scheibe sicher an das untere Ende der Scheibe und von dort in Entwässerungskanälen abgeführt werden kann.

## Beschreibung

Die Erfindung betrifft eine Dichtungsanordnung für ein Klappdach eines Hardtop-Fahrzeuges mit einem Front- und einem Heckdachteil, die über schwenkbare seitliche Dachsäulen aus einer geschlossenen Stellung in eine Ablagestellung innerhalb eines Heckkofferraums gebracht werden können, wobei im Heckdachteil ein gegenüber den seitlichen Dachsäulen verschwenkbarer Rahmen mit einer Heckscheibe vorgesehen ist.

Aus der DE 197 51 660 C1 ist eine Vorrichtung zur Ablage der Dachkonstruktion eines Hardtop-Fahrzeuges bekannt, das die oben erwähnten Merkmale aufweist. Der Vorteil einer solchen Anordnung ist es, dass die Dachkonstruktion raumsparend abgelegt werden kann, weil Frontdachteil und Heckdachteil mit der Heckscheibe im gleichen Sinn gekrümmt im Heckbereich des Fahrzeuges abgelegt werden können.

Der vorliegenden Erfindung liegt die Aufgabe zugrunde, für eine solche Dachanordnung eine Abdichtung vorzusehen, welche sicherstellt, dass das Dach im geschlossenen Zustand dicht ist und Wasser einwandfrei so abgeführt werden kann, dass der Innenraum unbeeinträchtigt bleibt.

Für die neue Dichtanordnung der eingangs genannten Art wird zu diesem Zweck vorgeschlagen, dass die Heckscheibe an ihrem vorderen am Frontdachteil zur Anlage kommenden Bereich einen das Frontdachteil und die seitlichen Dachsäulen untergreifende, aus einer Hauptabdichtung und einer Komfortdichtung mit einem dazwischen liegenden Kanal bestehenden Dichtungsstreifen versehen ist, der sich bis in den Bereich der Schwenkachse der Heckscheibe erstreckt, dass die seitlichen Dachsäulen eine die Heckscheibe untergreifende Dichtung aufweisen, die sich vom Bereich der Schwenkachse bis zum hinteren Rand der Heckscheibe erstreckt und ebenfalls aus einer Hauptabdichtung, einer Komfortabdichtung und einem dazwischen liegenden Kanal besteht, dass die beiden Hauptdichtungen mit ihren einander zugewandten Stoßstellen im Bereich der Schwenkachse aneinandergrenzen und die an den seitlichen Dachsäulen angeordnete Dichtung in diesem Bereich mit einem zusätzlichen Kanal versehen ist, der mit dem Kanal der Heckscheibendichtung fluchtet und unter der Hauptdichtung hindurch mit dem Kanal zwischen Haupt- und Komfortdichtung in Verbindung steht.

Durch diese Ausgestaltung wird es trotz der Beweglichkeit der Heckscheibe in einfacher und sicherer Weise möglich, Regen oder Waschwasser vom Dachbereich aus nach unten abzuleiten, ohne dass gesonderte aufwendige Maßnahmen getroffen werden müssen.

In Weiterbildung der Erfindung können die Hauptdichtungen an ihren Stoßstellen schräg beschnitten sein und zwar so, dass sie sich bei der Schwenkbewegung der Heckscheibe unter Druck auf die entsprechende Gegenfläche der anderen Dichtung auflegen und so bei der Schwenkbewegung nur auf Druck belastet sind, so dass ein Verschleiß vermieden werden kann.

In Weiterbildung der Erfindung kann schließlich, um die Wasserführungen in den Leckkanälen im Schwenkbereich unter den Hauptdichtungen zu bewirken, an der Übergangsstelle eine Auffangwanne unter der Hauptdichtung vorgesehen sein, welche zur Weiterführung von Wasser dient.

Die Erfindung ist anhand eines Ausführungsbeispieles in der Zeichnung dargestellt und wird im folgenden erläutert. Es zeigen:
- Fig. 1: eine schematische perspektivische Teildarstellung einer Heckansicht der Dichtungsanordnung nach der Erfindung,
- Fig. 2: eine vergrößerte Teilansicht des Bereiches II der Fig. 1,
- Fig. 3: eine vergrößerte Darstellung eines Teil-Längsschnittes durch die Hauptdichtungen im Bereich der Schwenkachse,
- Fig. 4: eine vergrößerte Teildarstellung eines Längsschnittes durch die obere Abdichtung der schwenkbaren Heckscheibe gemäß dem Detail IV und
- Fig. 5: eine vergrößerte Detaildarstellung eines Schnittes durch die Dach- und Dichtungsanordnung im Bereich V der Fig. 1.

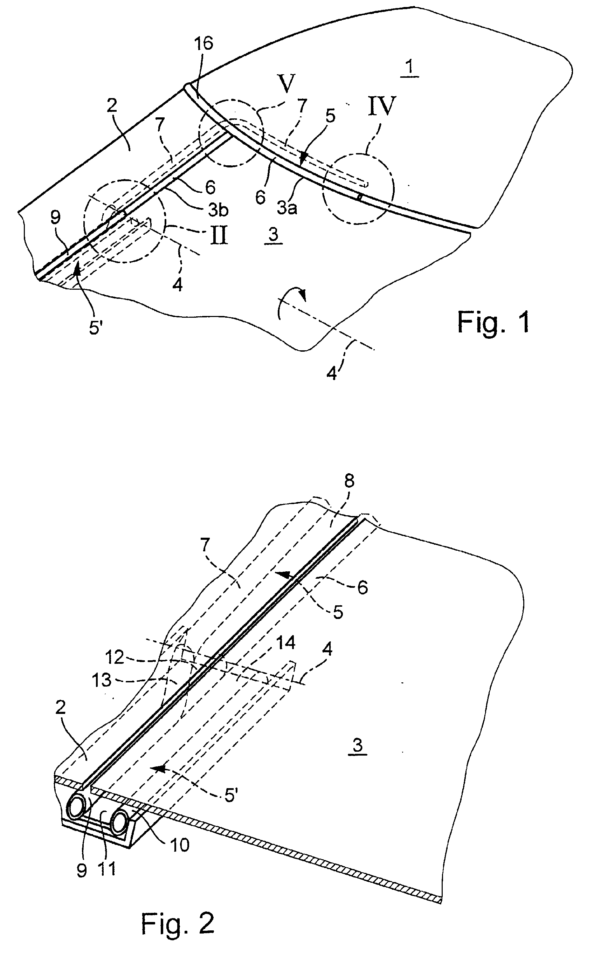

Aus der schematischen Darstellung der Fig. 1 ist zu erkennen, dass das gezeigte Klappdach eines nicht näher dargestellten Hardtop-Fahrzeuges aus einem festen Frontdachteil 1, aus nach hinten abschwenkbaren seitlichen Dachsäulen 2 (C-Säulen) und aus einem nicht näher dargestellten und mit einer Heckscheibe 3 ausgerüsteten Rahmen besteht, der um die Achse 4 gegenüber den seitlichen Dachsäulen im Uhrzeigersinn verschwenkbar ist, um beim Ablegevorgang des Daches mit der gleichen Krümmung unterhalb des Frontdachteiles 1 zur Ablage zu kommen, wenn das Hardtopdach aus der in Fig. 1 dargestellten geschlossenen Stellung durch Abschwenken der seitlichen Dachsäulen 2 in einen Ablageraum innerhalb des nicht gezeigten Heckkofferraumes kommt. Dieser Ablegevorgang und die Dachanordnung entspricht dabei bezüglich der Bewegungsvorgänge der in der DE 197 51 660 C1 gezeigten Ablagevorrichtung.

Da die Heckscheibe 3 mit ihrem Rahmen um die Achse 4 schwenkbar ist und daher weder in den seitlichen Dachsäulen 2 noch gegenüber dem Frontdachteil 1 fest und bleibend abgedichtet werden kann, ist mit der Heckscheibe 3 bzw. mit deren Rahmen eine entlang der gesamten Oberkante 3a und im Abstand vor dieser umlaufender Dichtstreifen 5 vorgesehen, der aus einer Hauptdich- tung 6, einer Komfortdichtung 7 und einem dazwischen liegenden Kanal 8 zur Wasserführung besteht. Der Dichtstreifen 5 ist jeweils um die beiden oberen Ecken der Heckscheibe 3 herum und an deren Seitenkanten 3b bis in den Bereich der Schwenkachse 4 geführt. Dort grenzt an beiden Seiten - die Ausbildung an der rechten Seite der Scheibe 3 ist spiegelbildlich zu jener, die auf der linken Seite gezeigt ist - eine Dichtung 5' an den Dichtstreifen 5 an, die, wie insbesondere aus Fig. 2 hervorgeht, ebenfalls aus einer Hauptdichtung 9, einer mehr in das Innere der Scheibe hereinreichenden Komfortdichtung 10 und aus einem dazwischen liegenden Kanal 11 zur Leckwasserführung aufgebaut ist. Die Dichtung 5' besitzt dabei, wie insbesondere aus Fig. 2 erkennbar ist, einen weiteren Kanal 12, der nach außen durch eine zusätzliche Dichtung 13 abgegrenzt ist, die ihrerseits an die Komfortdichtung 7 des Dichtstreifens 5 angrenzt. Unterhalb der beiden Hauptdichtungen 6 und 9 ist eine Auffangwanne 14 vorgesehen, durch die das Wasser, das durch den Kanal 8 des Dichtstreifens 5 aus dem oberen Bereich der Scheibe 3 nach unten strömt, in den Leckwasserkanal 11 der Dichtung 5' und von dort aus dann zu einer Entwässerungsstelle geführt werden kann.

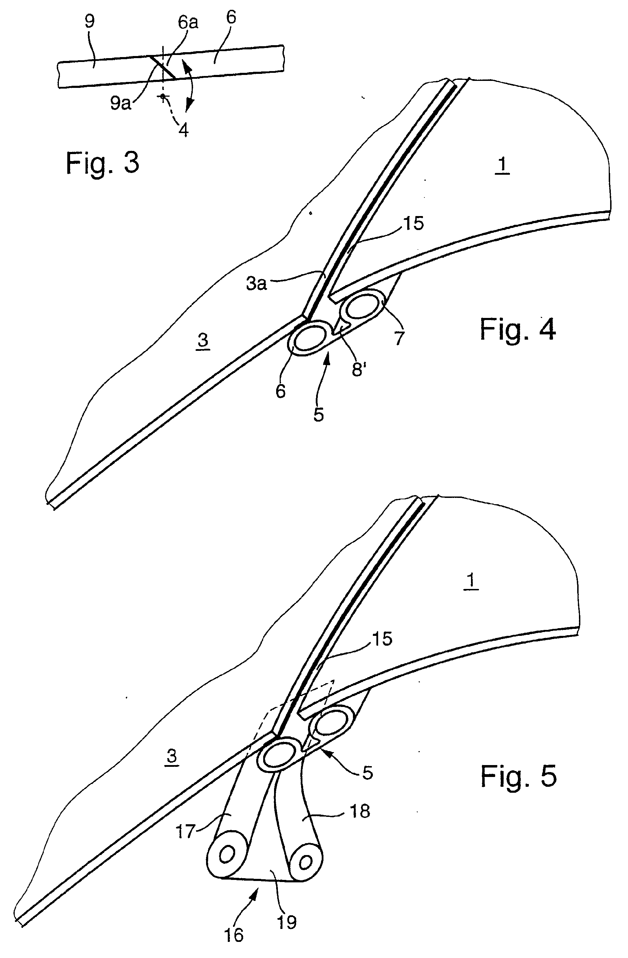

Die Fig. 3 lässt dabei erkennen, dass die beiden Hauptdichtungen 6 und 9 des Dichtstreifens 5 bzw. der Dichtung 5' über schräg geschnittene Stoßflächen 6a bzw. 9a aneinander grenzen, die jeweils senkrecht oberhalb der Schwenkachse 4 so angeordnet sind, dass die Stoßfläche 6a bei einer Verschwenkung der Scheibe 3 um die Schwenkachse 4 nur unter Druck in Berührung mit der Stoßfläche 9a kommt, wenn die Scheibe kurz vor der Schließstellung steht. Es wird auf diese Weise ausgeschlossen, dass an den Stoßstellen der Dichtungen ein Verschleiß auftritt. Möglich ist es zudem, dass in den Dichtstreifen 5 und in die Dichtung 5', jedenfalls im Bereich der Hauptdichtungen 6 und 9, keilförmige Führungselemente sowie ein Anschlag integriert werden, die den Einlauf der beiden Keile bei einer Schwenkbewegung verbessern.

Es kann auf diese Weise an den Stoßstellen 6a und 9a eine einwandfreie und sichere Abdichtung erreicht werden. In gleicher Weise kann die Stoßstelle zwischen der Dichtung 13 und der Komfortdichtung 7 des Dichtstreifens ausgestaltet werden.

Die Fig. 4 zeigt den Dichtstreifen 5 unterhalb des Frontdachteiles 1, an dem er mit seiner Komfortdichtung 7 anliegt. Der zwischen Komfortdichtung 7 und Hauptdichtung 6 liegende Kanal 8 verläuft, wie Fig. 4 zeigt im Bereich des Spaltes 15 zwischen dem Frontdachteil 1 und der schwenkbaren Scheibe 3. Der Dichtstreifen 5 ist, wie diese Darstellung zeigt, fest mit der Scheibe 3 verbunden und wird von einem nicht gezeigten Rahmen, der die Scheibe 3 umgibt, unterstützt.

Die Fig. 5 lässt erkennen, dass im Eckbereich zwischen seitlichen Dachsäulen 2, Frontdach 1 und Heckscheibe 3 eine Überlappung zwischen dem Dichtstreifen 5 an der Heckscheibe und der Dichtung 16 vorliegt, welche zur Abdichtung zwischen seitlicher Dachsäule 2 (C-Säule) und dem Frontdach 1 vorgesehen ist. Auch diese Dichtung 16 besteht wiederum aus einer Hauptdichtung 17, einer Komfortdichtung 18 und einem dazwischen liegenden Leckwasserkanal 19.

## Patentansprüche

1. Dichtungsanordnung für ein Klappdach eines Hardtop-Fahrzeuges mit einem Front- und einem Heckdachteil, die über schwenkbare seitliche Dachsäulen (2) aus einer geschlossenen Stellung in eine Ablagestellung innerhalb eines Heckkofferraumes gebracht werden können, wobei im Heckdachteil ein gegenüber den seitlichen Dachsäulen verschwenkbarer Rahmen mit einer Heckscheibe (3) vorgesehen ist
**dadurch gekennzeichnet, dass**
die Heckscheibe (3) an ihrem vorderen, am Frontdachteil (1) zur Anlage kommenden Bereich mit einem das Frontdachteil und die seitlichen Dachsäulen (2) untergreifenden aus einer Hauptdichtung (6) und einer Komfortabdichtung (7) mit einem dazwischen liegenden Kanal (8) bestehenden Dichtungsstreifen (5) versehen ist, der sich bis in den Bereich der Schwenkachse (4) der Heckscheibe (3) erstreckt, dass die seitlichen Dachsäulen (2) eine die Heckscheibe (3) untergreifende Dichtung (5') aufweisen, die sich vom Bereich der Schwenkachse (4) bis zum hinteren Rand der Heckscheibe erstreckt und ebenfalls aus einer Hauptdichtung (9), einer Komfortdichtung (10) und einem dazwischen liegenden Kanal (11) besteht, dass die beiden Hauptdichtungen (6 und 9) mit ihren einander zugewandten Stoßstellen (6a, 9a) im Bereich der Schwenkachse (4) aneinandergrenzen und die an der seitlichen Dachsäule (2) angeordnete Dichtung (5') in diesem Bereich mit einem zusätzlichen Kanal (12) versehen ist, der mit dem Kanal (8) des Dichtstreifens (5) fluchtet und unter der Hauptdichtung (6, 9) hindurch mit dem Kanal (11) zwischen Haupt- und Komfortdichtung der Dichtung (5') in Verbindung steht.

2. Dichtungsanordnung nach Anspruch 1,
**dadurch gekennzeichnet, dass**
die Hauptdichtungen (6, 9) und die Komfortdichtungen (7, 10) jeweils aus Dichtungswulsten bestehen.

3. Dichtungsanordnung nach Anspruch 2,
**dadurch gekennzeichnet, dass**
die beiden Hauptdichtungen (6 und 9) an ihren Stoßstellen (6a, 9a) schräg beschnitten und senkrecht über der Schwenkachse (4) angeordnet sind.

4. Dichtungsanordnung nach Anspruch 3,
**dadurch gekennzeichnet, dass**
im Bereich der Stoßstellen der Hauptdichtungen (6, 9) Anschläge und Führungskeile zum besseren Ineinandergreifen der Dichtungen in die Formteile integriert sind.

5. Dichtungsanordnung nach Anspruch 1,
**dadurch gekennzeichnet, dass**
der zusätzliche Kanal (12) durch eine zusätzliche Dichtung (13) gebildet wird, die an der Dichtung (5') angeordnet ist und mit der Komfortdichtung (7) des Dichtstreifens (5) fluchtet.

6. Dichtungsanordnung nach Anspruch 1,
**dadurch gekennzeichnet, dass**
an der Übergangsstelle vom Kanal (12) in den Kanal (11) der Dichtung (5') eine Auffangwanne (14) unter den Hauptdichtungen (6, 9) vorgesehen ist, die ebenfalls im Bereich der Schwenkachse (4) liegt.
